# FASCICULE DE BREVET EUROPEEN

(11) **EP 1 675 475 B1**
(45) Date de publication et mention de la délivrance du brevet: **14.11.2007**
(21) Numéro de dépôt: 05775334.5
(22) Date de dépôt: 07.06.2005
(51) Int. Cl.: A23K 1/18, A23K 1/16

(54) **COMPLÉMENT ALIMENTAIRE POUR ANIMAUX, COMPRENANT UN ADDITIF OLFACTIF**
EINEN GERUCHSSTOFF ENTHALTENDER FUTTERZUSATZ FÜR TIERE
FOOD SUPPLEMENT FOR ANIMALS, COMPRISING AN OLFACTORY ADDITIVE

(30) Priorité: 08.06.2004 FR 0406177
(43) Date de publication de la demande: 05.07.2006
(73) Titulaire: Adisseo Ireland Limited, Dublin 1 (IE)
(72) Inventeur: GERAERT, Pierre-André, F-37210 Rochecorbon (FR); GOTTERBARM, Goetz, F-92210 Saint Cloud (FR); ANNONIER, Claude, F-49520 Noyant-la-Gravoyère (FR); MERCIER, Yves, F-63000 Clermont Ferrand (FR)
(74) Mandataire: Guerre, Dominique
(86) Numéro de dépôt international: PCT/FR2005/001395
(87) Numéro de publication internationale: WO 2006/003301

(56) Documents cités:
- FR-A- 2 807 677
- US-A- 4 175 121

## Description

La présente invention concerne de manière générale l'alimentation animale, et en particulier la complémentation de cette alimentation avec un composé actif, à savoir acide aminé ou un dérivé d'acide aminé, par exemple la méthionine. La présente invention concerne en particulier un complément alimentaire pour animaux comprenant au moins un acide aminé ou dérivé d'acide aminé et au moins un additif olfactif.

Les compléments alimentaires pour animaux sont des produits destinés à être ingérés, en complément de l'alimentation courante, afin de pallier l'insuffisance des apports journaliers en certains composés. Il est par exemple connu, de manière générale, de complémenter les rations alimentaires des animaux d'élevage avec des composés actifs, de manière à augmenter la performance zootechnique des animaux élevés.

La vocation des nutritionnistes pour animaux est de fournir une large gamme de compléments alimentaires, qui réponde aux attentes des fabricants d'aliments et éleveurs. Ainsi de nombreux procédés de synthèse de divers composés actifs sont régulièrement mis au point et les composés actifs en résultant, de préférence sous forme facilement additionnable aux rations alimentaires, sont mis sur le marché.

L'apport alimentaire en composés actifs dans le métabolisme protéique est essentiel. Alors que les glucides sont stockés sous forme de glycogène et les lipides sous forme de triglycérides, l'apport alimentaire de composés actifs dans le métabolisme animal protéique, et notamment les acides aminés, assure le renouvellement des protéines de l'organisme (le composé est alors actif pour la synthèse de protéines *in vivo*) et la synthèse de molécules azotées indispensables (par exemple, la carnitine, la créatine ou les nucléotides).

Néanmoins, il est connu que certains composés actifs dans le métabolisme protéique, et en particulier les acides aminés, présentent des propriétés organoleptiques (c'est-à-dire perceptibles par les organes des sens de manière générale) qui les rendent peu attrayants à ingérer. Ainsi, certains composés actifs semblent entraîner une diminution de l'ingestion chez les animaux, ce qui se traduit notamment par une altération perceptible des performances de croissance.

De nombreuses formulations et méthodes ont ainsi tenté de résoudre ce problème.

Notamment des techniques d'altération des groupes fonctionnels du composé actif ont été développées. Ces techniques tentent de modifier le composé actif lui-même, de manière à modifier ses qualités organoleptiques. C'est le cas par exemple de la demande EP 0 015 668 qui a trait à des poly-aminoacides digestibles par les enzymes protéolytiques présentes dans les systèmes digestifs des animaux et de l'homme, et qui présentent une odeur "moins désagréable" que celle des acides aminés libres correspondants.

Egalement, certains édulcorants ont été utilisés pour supprimer l'arrière goût amer de certains composés actifs. Notamment, la demande de brevet US 2002/0193342 décrit des compositions de masquage gustatif comprenant au moins un composé au goût désagréable (acide aminé, hydrolysat de protéines et/ou composant protéique), dans lesquelles le goût désagréable du composé est masqué par l'addition de sucralose (le sucralose est un édulcorant de synthèse à très fort pouvoir sucrant), de façon à fournir des compositions finales acceptables sur le plan gustatif. Il est important de constater que les compositions sont destinées à être ingérées par des consommateurs, c'est-à-dire par des personnes qui achètent le complément et ont par la suite la possibilité de revenir vers ledit complément.

Egalement, le brevet US 4,175,121 décrit un additif alimentaire à base d'hydroxy-analogue de méthionine et qui comprend un agent de masquage gustatif, par exemple une mélasse synthétique, connue pour ses propriétés gustatives, cet agent de masquage formant un revêtement adhérant autour des particules d'analogue.

Les compléments alimentaires envisagés par la présente invention sont destinés aux animaux. Ils doivent donc présenter certaines caractéristiques qui diffèrent des compléments destinés aux êtres humains.

Aujourd'hui le problème se pose d'apporter une amélioration supplémentaire aux compléments alimentaires pour animaux et notamment d'augmenter leur prise par les animaux.

La présente invention a donc pour objet de retenir d'autres voies que celles précédemment décrites pour améliorer en particulier l'appétence des compléments alimentaires précédemment envisagés.

Un autre objet de la présente invention est, en même temps, d'améliorer les conditions de mise en oeuvre desdits compléments pour le manipulateur humain.

Les inventeurs se sont rendus compte de manière inattendue qu'une faible teneur, voire une teneur infinitésimale, en additif olfactif neutralise l'odeur du composé actif au sein du complément alimentaire, alors même que ce composé actif est présent à une forte teneur au sein du complément.

En conséquence, conformément à la présente invention, le complément alimentaire pour animaux, qui se trouve sous forme solide divisée ou sous forme liquide, comprend au moins un composé actif, à savoir un acide aminé ou un dérivé d'acide aminé, présent à une teneur supérieure ou égale à 50% en poids du complément alimentaire, et est caractérisé en ce qu'il comprend en outre un additif olfactif, présent à une teneur inférieure ou égale à 3% en poids du complément alimentaire, ledit additif olfactif neutralisant l'odeur, perceptible par l'homme, dudit composé actif.

On distingue deux types d'aminoacides, les aminoacides essentiels qui doivent être apportés par l'alimentation (histidine, isoleucine, leucine, lysine, méthionine, thréonine, tryptophane, valine) et les aminoacides non essentiels que l'organisme peut synthétiser (alanine, arginine, asparagine, aspartate, cystéine, glutamate, glycine, proline, sérine, tyrosine). De tels composés sont aussi appelés "additifs nutritionnels".

Par "dérivés d'acides aminés", on entend par exemple les sels, les amides, les esters alkyliques et alcooliques, et les hydroxy-analogues des acides aminés et leurs dérivés eux-mêmes.

A titre indicatif d'un dérivé d'acide aminé selon la présente invention, l'acide 2-hydroxy-4-méthylthiobutanoïque (ci-après appelé HMB ou hydroxy-analogue de méthionine) est connu comme étant utilisé comme analogue de la méthionine pour nourrir les animaux d'élevage. Il a l'avantage de se présenter sous forme liquide, ce qui facilite son utilisation par les sociétés productrices d'aliments.

Il peut également s'agir d'esters alkyliques de méthionine ou de l'hydroxy-analogue de méthionine, dont la chaîne alkyle contient par exemple de 1 à 12 atomes de carbone. La chaîne alkyle peut être ramifiée, linéaire ou cyclique, par exemple isobutyle ou tertiobutyle.

Les compléments alimentaires de l'invention peuvent également comprendre plusieurs acides aminés et/ou dérivés d'acides aminés, par exemple un mélange de méthionine et de son hydroxy-analogue.

Il est certain que le choix de l'acide aminé ou du dérivé d'acide aminé est lié à sa biodisponibilité sanguine. Cette biodisponibilité passe par la détermination du taux en composé actif dans le sang, par rapport à la quantité de composé actif introduite dans la ration de l'animal. Cette détermination prend en compte le taux d'absorption dans l'intestin au cours du transit digestif, le passage du bol alimentaire dans les différents estomacs des animaux polygastriques et le taux de transformation du composé actif si celui-ci n'est pas directement assimilable par l'organisme (c'est par exemple le cas de l'hydroxy-analogue de méthionine).

Le choix de l'acide aminé ou du dérivé d'acide aminé est également lié à l'effet zootechnique recherché sur l'animal. On peut par exemple souhaiter obtenir un effet bénéfique sur la reproduction, comme l'augmentation du pourcentage de fécondation. On peut également souhaiter augmenter chez les bovins le volume laitier ou le taux protéique du lait. On peut souhaiter améliorer la croissance de l'animal. Par exemple, la complémentation en méthionine est nécessaire chez les animaux monogastriques, et ce afin d'assurer des performances optimales.

Ledit acide aminé ou dérivé d'acide aminé se trouve sous une forme appropriée à son ajout au complément alimentaire. Il peut notamment se trouver sous forme solide divisée, par exemple de granules, de poudre, ou sous forme liquide, de façon naturelle ou être mis en suspension ou solution. Egalement, ledit acide aminé ou dérivé d'acide aminé peut se trouver sous forme enrobée, de manière à éviter la destruction enzymatique qui a lieu à un certain pH, par exemple dans la panse des ruminants, et en même temps de manière à permettre la libération contrôlée de l'acide aminé ou dérivé d'acide aminé dans une autre partie de l'appareil digestif. L'acide aminé ou dérivé d'acide aminé peut également se trouver sous forme de comprimés à libération prolongée ou à libération contrôlée.

Selon une variante de la présente invention, ledit composé actif est la méthionine et l'acide 2-hydroxy-4-méthylthiobutanoïque.

Par "animal", on entend plus particulièrement les animaux d'élevage et notamment les animaux de pacage (notamment les bovins élevés pour la viande, le lait, le fromage et le cuir ; les ovins élevés pour la viande, la laine et le fromage ; les caprins ; les porcins), les lapins, les volailles (les poulets, les poules, les dindes, les canards, les oies et autres), les animaux aquatiques (par exemple les poissons, les crevettes, les huîtres et les moules), les animaux de loisir et de compagnie (notamment le cheval, le chien, le chat). Les bovins, ou bovinés, constituent une sous-famille des bovidés, mammifères ruminants polygastriques, qui comprend plusieurs espèces importantes d'animaux d'élevage (races laitières, races à viande et races mixtes).

Par "additif olfactif', on entend toute substance, composé ou composition, ajouté intentionnellement à un autre composé ou à une composition, qui modifie les caractères olfactifs propres du composé ou de la composition auxquels il est ajouté. Cet additif peut comporter ou non une valeur nutritive et être ou non consommé comme aliment en soi. Le terme "additif olfactif' couvre également tout mélange de substances ou toute fraction, par exemple obtenue à partir d'une plante. Il peut par exemple s'agir d'un mélange complexe de composés volatils. Ainsi, "additif olfactif' se rapporte au sens de l'odorat. De façon stricte, il ne s'applique qu'à ce qui est perçu par le nez, par opposition au terme "saveur" qui désigne une qualité ou caractère perçu par le sens du goût. Cependant, le dit additif olfactif peut également agir sur le goût, cela en même temps que sur l'odorat. On peut opposer au terme "odeur" ("olfactory additive" en anglais), le mot "goût" ("taste" ou "flavor" en anglais) ou "saveur", qui qualifie la propriété d'un produit d'éveiller une ou plusieurs des quatre saveurs élémentaires : acide, amère, salée, sucrée, en stimulant l'appareil gustatif.

Aux fins de la présente invention, le terme "additif olfactif' couvre les senteurs de manière générale, les substances odorantes, les préparations odorantes, les parfums de transformations, les odeurs de fumée ou leur mélanges. Il peut s'agir d'une senteur naturelle, provenant dans la majorité des cas des plantes à fleurs, ou d'une senteur artificielle ou synthétique, qui présente l'avantage d'être moins onéreuse. L'additif olfactif selon l'invention peut également être formulé à partir d'une ou plusieurs substances aromatiques.

Le terme "arôme" est également couvert sous le terme générique "additif olfactif', à condition que ledit arôme soit caractérisé par des propriétés olfactives, en plus de ses propriétés gustatives. Ainsi, conviennent pour la présente invention des arômes présentant à la fois des propriétés olfactives et gustatives, impliquant respectivement le sens de l'odorat et du goût. Il est néanmoins utile de préciser que selon la présente invention l'effet recherché est celui qui est lié aux propriétés olfactives de l'additif. Il est néanmoins évident qu'on ne peut exclure du champ de définition du terme "additif olfactif' un composé qui présente, outre des propriétés olfactives, des propriétés gustatives.

L'additif olfactif peut être obtenu par des procédés physiques appropriés, ou des procédés enzymatiques ou microbiologiques, à partir d'une matière d'origine végétale ou animale, soit en l'état, soit transformée pour sa consommation par des procédés traditionnels de préparation de denrées alimentaires. Il peut également être obtenu par synthèse chimique ou isolé par des procédés chimiques. Enfin, cet additif peut être obtenu par chauffage d'un mélange d'ingrédients qui ne possèdent pas nécessairement individuellement des propriétés olfactives.

De manière générale, l'additif olfactif doit répondre par ailleurs à des contraintes très strictes, et notamment relativement à la réglementation applicable au niveau de la toxicité du fait de son ingestion par l'animal.

Différentes perceptions peuvent caractériser un additif olfactif selon la présente invention. On distingue généralement la note de tête, la note de corps ou note intermédiaire et la note de fond. La note de tête est la première impression olfactive perçue, elle est due au caractère volatil de certaines matières premières qui la composent. Elle favorise la détection immédiate de l'odeur. C'est le cas par exemple du parfum de lavande. Les secondes odeurs perçues sont les notes de corps qui persistent plusieurs heures, par exemple le bois. Enfin, les notes de fond sont les troisièmes odeurs perçues. A titre d'exemple, c'est le cas de la vanille et de l'ambre.

On peut choisir un additif olfactif selon la présente invention en tenant compte de la succession des perceptions.

Selon la présente invention, le complément alimentaire comprend au moins un complément alimentaire tel que précédemment défini, présent à une teneur supérieure ou égale à 50% en poids du complément alimentaire. Ainsi, l'acide aminé ou dérivé d'acide aminé représente la moitié au moins de la composition en poids du complément alimentaire. Le complément alimentaire est donc principalement à base d'acide aminé ou de dérivé d'acide aminé.

Egalement, selon la présente invention, le complément alimentaire comprend un additif olfactif présent à une teneur inférieure ou égale à 3% en poids du complément alimentaire.

Selon une variante de la présente invention, le composé actif est présent au sein du complément alimentaire à une teneur supérieure ou égale à 90% en poids dudit complément. Selon une autre variante de la présente invention, ledit additif olfactif est présent au sein du complément alimentaire à une teneur inférieure ou égale à 1% en poids dudit complément, et de préférence à une teneur comprise entre 0,01 % et 1 %, ou entre 0,03% et 0,1%, en poids dudit complément.

En outre, la présente invention est caractérisée en ce que ledit additif olfactif neutralise l'odeur dudit composé actif. Par "neutraliser", on entend l'action d'annuler ou supprimer l'odeur, du composé actif, perceptible par l'animal et/ou l'homme. Selon un autre mode de réalisation de la présente invention, ledit additif olfactif masque l'odeur du composé actif. Par "masquer", on entend l'action non seulement d'annuler l'odeur du composé actif, mais aussi de substituer à celle-ci une autre odeur, agréable ou acceptable pour l'animal et/ou l'homme. Le verbe "masquer" est donc de degré supérieur, par rapport au verbe "neutraliser". Selon la présente invention, l'additif neutralise, puis éventuellement il masque l'odeur désagréable du composé actif.

En outre, l'additif olfactif peut conférer audit complément une odeur distincte de l'odeur dudit et même complément sans ledit additif olfactif, et cela de manière perceptible par l'animal.

La perception chez l'animal de l'additif olfactif peut être établie en différenciant, de manière significative ou discriminante, un comportement d'intérêt zootechnique, par exemple l'appétence, vis-à-vis respectivement du complément alimentaire sans l'additif olfactif, et du même complément avec ledit additif olfactif.

Une telle caractéristique de perception chez l'animal peut, par exemple, être mise en évidence par la mise en oeuvre d'un test de consommation, consistant à comparer la consommation d'aliments contenant lesdits différents compléments, et d'aliments n'en contenant pas.

Ainsi, de manière générale, l'objectif du test est de comparer la consommation d'une population animale, lorsque cette population animale a le choix entre des aliments contenant le composé actif auquel on ajoute l'additif olfactif, et des aliments contenant l'acide aminé ou le dérivé d'acide aminé sans l'additif olfactif, ce dernier étant, à titre d'exemple, employé pour augmenter l'appétence de l'aliment. Par "appétence", on entend le désir d'absorber l'aliment en réponse à la perception des caractères organoleptiques dudit aliment.

Le test de consommation peut donc servir à évaluer l'efficacité de compléments alimentaires.

Le test doit répondre aux exigences de la directive européenne du 24/11/86 relative à la protection des animaux utilisés à des fins expérimentales ou à d'autres fins scientifiques.

Chaque complément alimentaire, comportant ou non un additif olfactif est appelé item d'essai. Dans un premier temps, on définit le schéma expérimental suivi, c'est-à-dire l'espèce animale testée, l'effectif dans chaque groupe, le régime suivi, la durée du régime et la dose dans chaque item d'essai. Il est également nécessaire de choisir un aliment de base auquel seront ajoutés les différents items d'essais à tester. Cet aliment de base peut par exemple comprendre du maïs, du blé, du pois et du soja. Des contrôles doivent être également inclus dans l'étude. Un tel test est par exemple mis en oeuvre dans les exemples 2 à 4.

Le complément alimentaire selon l'invention comprend un composé actif, à savoir acide aminé ou un dérivé d'acide aminé, à une teneur supérieure ou égale à 50% en poids du complément, et un additif olfactif tel que défini précédemment et présent à une teneur inférieure ou égale à 3% en poids du complément. Le complément alimentaire de la présente invention est en outre susceptible de comprendre d'autres ingrédients. Parmi ceux-ci, on peut par exemple citer les agents liants et les agents dilluants, par exemple de l'eau. Il peut également comprendre plusieurs acides aminés et/ou dérivés d'acides aminés.

Comme cela est explicité plus haut, l'acide aminé ou dérivé d'acide aminé est choisi en fonction de l'effet zootechnique recherché (croissance, production de lait...). Egalement, la composition globale du complément alimentaire selon l'invention dépend de l'effet technique dudit additif olfactif. De manière préférentielle, ledit additif olfactif augmente l'appétence dudit complément par rapport au même complément, mais sans ledit additif olfactif.

Les compléments alimentaires de la présente invention sont destinés aux animaux ; l'odeur du complément auquel on a ajouté l'additif doit être perceptible de manière significative ou discriminante par l'animal pour lequel la ration est destinée, et ce par rapport au même complément mais sans ledit additif olfactif.

En outre, les compléments alimentaires selon l'invention sont notamment manipulés par toutes les personnes mettant en oeuvre l'additif lors de fabrication des compléments ou des aliments, et il est avantageux que l'odeur du complément auquel on ajoute un additif olfactif soit églament perceptible par l'homme. Ainsi, de manière avantageuse, le complément selon l'invention comprend un additif olfactif qui neutralise l'odeur du composé actif de manière perceptible par l'homme. En outre, cet additif olfactif confére audit complément une odeur perceptible par l'homme et distincte de l'odeur dudit et même complément sans ledit additif olfactif, à savoir, ou la suppression ou neutralisation de l'odeur attachée à ou caractéristique du composé actif, ou la substitution à ladite odeur d'une nouvelle ou autre odeur, agréable ou acceptable chez l'homme.

Le dit complément alimentaire est obtenu par mélange de ces différents constituants. Ledit additif olfactif et le composé actif sont donc intimement mélangés. Ces deux composés ne sont nullement séparés par toute barrière appropriée. Les différentes molécules odorantes sont au contact les unes des autres.

Ainsi, selon une variante de la présente invention, le composé actif et l'additif olfactif sont mélangés et au contact l'un de l'autre.

La présente invention concerne également un aliment pour animal, notamment du type ration alimentaire, comprenant le complément alimentaire tel que ci-dessus défini.

La présente invention concerne, en outre, un procédé d'alimentation d'un animal d'élevage, caractérisé en ce qu'on ajoute un complément alimentaire tel que ci-dessus défini, à la ration alimentaire dudit animal.

La présente invention concerne enfin l'utilisation du complément alimentaire tel que ci-dessus défini pour nourrir un animal d'élevage, et éventuellement pour améliorer ses performances zootechniques.

Les exemples ci-dessous et les figures permettront de mettre en évidence certains avantages et caractéristiques de la présente invention.

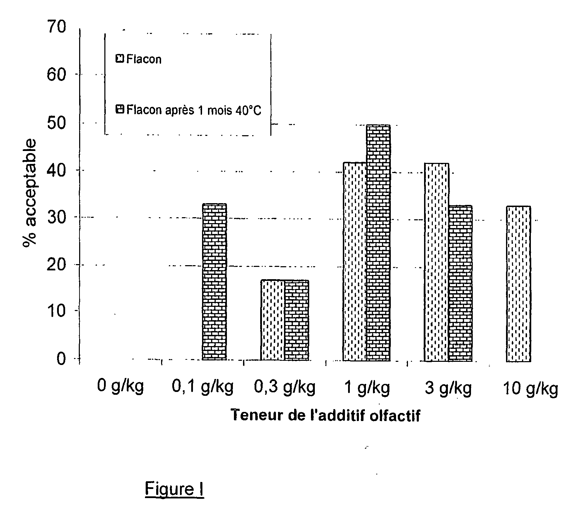

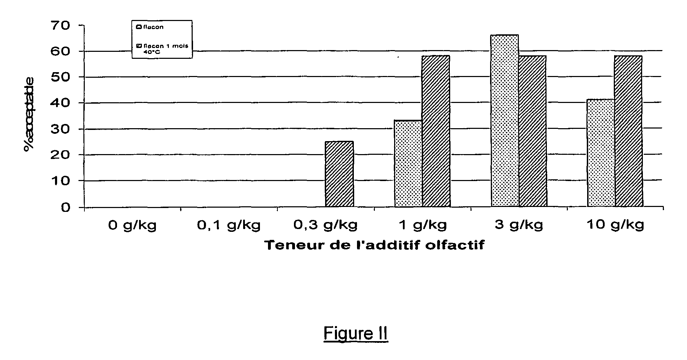

La figure I est obtenue à partir des données du tableau I. Elle représente l'effet de l'additif olfactif sur l'odeur du composé actif n°1 (hydroxy-analogue de méthionine).

La figure II est obtenue à partir des données du tableau II. Elle représente l'effet de l'additif olfactif sur l'odeur du composé actif n°2 (ester isopropylique de l'hydroxy-analogue de méthionine).

### Exemple 1

L'objectif est de déterminer les concentrations minimales d'un additif olfactif permettant de masquer l'odeur soufrée de deux composés actifs.

L'additif olfactif choisi est une composition ayant une note de fond notamment de type vanille et des notes fruitées (ananas, ...). L'hydroxy-analogue de méthionine (composé actif n°1) est commercialisé par Adisseo, sous le nom commercial AT88. L'ester isopropylique de l'hydroxy-analogue de méthionine (composé actif n°2) est commercialisé par Adisseo sous le nom commercial MetaSmart.

On prépare une gamme de solutions de composé actif n°1 et de composé actif n°2 contenant des concentrations variables d'additif : on verse 100 g de composé actif n°1 ou de composé actif n°2 dans 6 flacons verre de 125 ml. Dans 5 des 6 flacons, on ajoute les quantités suivantes d'additif olfactif: 0,010g (soit une solution à environ 0,01% en poids d'additif olfactif); 0,030g (soit une solution à environ 0,03% en poids d'additif olfactif); 0,1g (soit une solution à environ 0,1% en poids d'additif olfactif); 0,3g (soit une solution à environ 0,3% en poids d'additif olfactif) et 1 g (soit une solution à environ 1 % en poids d'additif olfactif). Les flacons sont ensuite bouchés et agités manuellement.

L'évaluation de l'odeur perçue par l'homme, des solutions précitées a lieu de la manière suivante : le caractère agréable ou désagréable de l'odeur que dégage le produit (composé actif avec ou sans additif olfactif) est évalué par un jury de nez rassemblant 12 personnes. Chaque personne donne sa perception selon trois critères :
- désagréable
- acceptable
- agréable.

On place les 6 flacons de mélange sur une paillasse, sous une sorbonne en marche. Les flacons sont ouverts chacun leur tour et le testeur plonge une languette de papier sur 1 cm dans le mélange. Le papier est porté à hauteur du nez et la personne du jury hume le papier rapidement puis donne son appréciation selon les trois sensations. On commence par le flacon témoin sans additif olfactif puis on poursuit par les mélanges de plus en plus concentrés en additif olfactif. Une fois toutes les réponses obtenues avec le jury de nez, les flacons sont rebouchés et placés dans une étuve à 40°C pendant 4 semaines. A l'issue de ce laps de temps, les produits sont ramenés à température ambiante, puis une nouvelle évaluation de l'odeur par le même jury de nez est effectuée.

On présente les résultats détaillés de la consultation pour chaque type de produit : tableaux I et II.

### A. Tableaux d'appréciation

**Tableau I : appréciation de l'odeur du mélange composé actif n°1 et additif olfactif à différentes concentrations.**

| | add. olf. / composé | | add. olf. / composé | | add. olf. / composé | | add. olf. / composé | | add. olf. / composé | |
|---|---|---|---|---|---|---|---|---|---|---|
| | actif n°1 | | actif n°1 | | actif n°1 | | actif n° 1 | | actif n°1 | |
| | **0,106 g/kg** (0,1g/kg) | | **0,302 g/kg** (0,3g/kg) | | **1,001 g/kg** (1g/kg) | | **3,02 g/kg** (3g/kg) | | **9,97 g/kg** (10g/kg) | |
| | Temp. Ambiante | Ap. Vieil. 1 mois à 40°c | Temp. Ambiante | Ap. Vieil. 1 mois à 40°c | Temp. Ambiante | Ap. Vieil. 1 mois à 40°c | Temp. Ambiante | Ap. Vieil. 1 mois à 40°c | Temp. Ambiante | Ap. Vieil. 1 mois à 40°c |
| Jury 1 | - | - | - | - | - | + | + | + | - | - |
| Jury 2 | - | + | + | - | - | - | - | - | - | - |
| Jury 3 | - | + | - | - | + | - | - | - | - | - |
| Jury 4 | - | + | + | + | + | + | - | + | - | - |
| Jury 5 | - | - | - | - | + | + | + | + | ++ | - |
| Jury 6 | - | - | - | - | - | - | - | + | + | - |
| Jury 7 | - | - | - | - | - | + | - | - | - | - |
| Jury 8 | - | - | - | - | - | - | - | - | - | - |
| Jury 9 | - | + | - | - | - | - | - | - | + | - |
| Jury 10 | - | - | - | - | + | + | + | - | - | - |
| Jury 11 | - | - | - | + | - | - | + | - | + | - |
| Jury 12 | - | - | - | - | + | + | + | - | - | - |
| % d'accep table | **0** | **33** | **17** | **17** | **42** | **50** | **42** | **33** | **33** | **0** |

| | | | | | | | | | | |
|---|---|---|---|---|---|---|---|---|---|---|
| ++ : agréable + : acceptable - : désagréable | | | | | | | | | | |

**Tableau II : appréciation de l'odeur du mélange composé actif n°2 et additif olfactif à différentes concentrations.**

| | add. olf. / composé | | add. olf. / composé | | add. olf. / composé | | add. olf. / composé | | add. olf. / composé | |
|---|---|---|---|---|---|---|---|---|---|---|
| | actif n°2 | | actif n°2 | | actif n°2 | | actif n°2 | | actif n°2 | |
| | **0,12 g/kg** (0,1g/kg) | | **0,34 g/kg** (0,3g/kg) | | **1,01 g/kg** (1g/kg) | | **3 g/kg** (3g/kg) | | **10,03 g/kg** (10g/kg) | |
| | Temp. Ambiante | Ap. Vieil. 1 mois à 40°c | Temp. Ambiante | Ap. Vieil. 1 mois à 40°c | Temp. Ambiante | Ap. Vieil. 1 mois à 40°c | Temp. Ambiante | Ap. Vieil. 1 mois à 40°c | Temp. Ambiante | Ap. Vieil. 1 mois à 40°c |
| Jury 1 | - | - | - | - | + | + | + | + | - | - |
| Jury 2 | - | - | - | + | + | - | - | - | - | - |
| Jury 3 | - | - | - | + | - | + | + | + | - | - |
| Jury 4 | - | - | - | - | + | + | + | + | - | - |
| Jury 5 | - | - | - | - | - | - | + | + | + | + |
| Jury 6 | - | - | - | - | + | + | + | + | ++ | + |
| Jury 7 | - | - | - | - | - | - | - | - | - | + |
| Jury 8 | - | - | - | - | - | - | + | + | + | + |
| Jury 9 | - | - | - | - | - | - | - | - | - | + |
| Jury 10 | - | - | - | - | - | + | + | - | - | - |
| Jury 11 | - | - | - | + | - | + | - | - | + | + |
| Jury 12 | - | - | - | - | - | + | + | + | + | + |
| % acceptable | **0** | **0** | **0** | **25** | **33** | **58** | **66** | **58** | **41** | **58** |

| | | | | | | | | | | |
|---|---|---|---|---|---|---|---|---|---|---|
| ++ : agréable + : acceptable - : désagréable | | | | | | | | | | |

### B. Courbes de réponse

A partir des données des tableaux I est II, on obtient respectivement les figures I et II, représentant le taux d'acceptabilité pour chaque mélange, en faisant la moyenne des réponses obtenues.

NB : comme la réponse ++ (i.e. agréable) n'est obtenue qu'une seule fois par type de mélange, elle est comptée dans les réponses + (i.e. acceptable). Comme cela apparaît à la lecture de la figure I, l'ajout de l'additif olfactif a un effet notable sur la perception de l'odeur du composé actif n°1.

Dès la concentration de 0,3 g/kg d'additif olfactif, 17% du jury trouve l'odeur du mélange acceptable.

Mais quelque soit la dose d'incorporation, il n'y a pas de majorité pour trouver que l'odeur est acceptable (de 1 g/kg à 10 g/kg).

Dans les commentaires des membres du jury, on note qu'au-delà de 3 g/kg c'est l'odeur de l'additif qui prédomine sans toutefois rendre agréable le mélange.

On peut donc préconiser un ajout de 1 g par kg de composé actif n°1 pour optimiser la neutralisation de la mauvaise odeur du composé actif n°1 seul.

On a une courbe de réponse différente après vieillissement pendant 1 mois à 40°C des solutions supplémentées en additif olfactif.

Cette fois, un effet neutralisant se fait sentir dès 0,1 g d'arôme par kg de composé actif n°1, puisque 33% du jury trouve cette fois acceptable l'odeur du produit.

On atteint la majorité d'acceptabilité à partir de 1 g/kg.

Puis à 10 g, c'est l'effet inverse qui se produit, la trop forte odeur de l'additif olfactif prend nettement le dessus.

On a une amélioration de l'acceptabilité du mélange après vieillissement , sans doute du fait que des composés volatils malodorants du composé actif n°1 se sont décomposés. L'additif olfactif est bien stable dans ces conditions.

La préconisation à 1 g/kg reste inchangée.

Tel que le montre la figure II, l'ajout de l'additif olfactif a un effet notable sur la perception de l'odeur du composé actif n°2. A partir d'un ajout de 0,3 g/kg de composé actif n°2, 25% du jury trouve l'odeur du produit acceptable.

L'optimum de réponse d'acceptabilité (2 personnes sur 3) est atteint pour un ajout de 3 g/kg.

Puis le % d'acceptabilité décroît pour la dose de 10 g/kg (trop d'additif olfactif donne une odeur désagréable).

On préconise donc un ajout compris entre 1 et 3 g pour que l'effet neutralisant soit efficace.

On constate le même effet du vieillissement sur l'efficacité de l'agent neutralisant dans le sens de l'amélioration.

Après 1 mois à 40°C, 25% du jury trouve acceptable l'odeur du mélange avec ajout de 0,3 g/kg (pour 0% avec le produit frais).

La majorité du jury (58%) trouve acceptable le mélange avec un ajout de 1 g/kg.

A 3g, il n'y a pas de différence de perception et à 10g, il y a une amélioration de l'acceptabilité entre t=0 et t=1 mois.

On en conclut que l'additif olfactif ne subit pas de dégradation pendant une durée de stockage d'un mois à 40°C et que des composés volatils malodorants du composé actif n°2 peuvent aussi se transformer.

### Exemple 2

L'objectif de l'essai est de comparer la consommation de poulets de 7 jours lorsqu'ils ont le choix entre des aliments contenant de l'hydroxy-analogue de méthionine (item d'essai n°1) ou de l'hydroxy-analogue de méthionine auquel on ajoute 1g/kg d'additif olfactif (item d'essai n°2), pour un même apport de méthionine, avec des comparaisons par couple et en fonction de la source de méthionine apportée par l'aliment de J0 à J6 (items d'essais n°1 ou 2).

L'item d'essai n°2 comprend donc 99,9% en poids d'hydroxy-analogue de méthionine et 0, 1 % en poids d'additif olfactif.

Les items d'essais sont incorporés à un mélange maïs et soja, qui sert d'alimentation de base. Les mesures de consommation sont faites sur 24 heures.

Le schéma expérimental se présente comme suit :

| Régimes | A | B | C | D |
|---|---|---|---|---|
| Alimentation de J0 à J6 | Item d'essai n°1 | | Item d'essai n°2 | |
| Alimentation de J7 à J8 | Item d'essai n°1 | Item d'essai n°2 | Item d'essai n°1 | Item d'essai n°2 |
| Doses (%) | 0,17 | 0,17 | 0,17 | 0,17 |
| Effectifs | 100 | | 100 | |

200 poussins mâles de souche ROSS sont sélectionnés et placés dans des cages équipées d'un abreuvoir à palette et d'un nourrisseur d'une capacité de 0,3kg environ. On place 10 poussins par cage.

Les animaux sont séparés en deux groupes, recevant, au cours de la période pré expérimentale (c'est-à-dire de J0 à J6) l'item d'essai n°1 ou 2.

Au cours de la phase expérimentale (c'est-à-dire de J7 à J8), les animaux ont le choix entre l'aliment qu'ils ont eu les 6 premiers jours et l'autre aliment, chacun de ces aliments étant situé dans deux mangeoires différentes de la même cage. L'alimentation est ad libitum avec contrôle des consommations à T0 + 1 heure, T0 + 2 heures, T0 + 4 heures, T0 + 6 heures, T0 + 8 heures, T0 + 10 heures et T0 + 24 heures. De plus, à chaque contrôle les deux mangeoires sont interverties afin d'éviter que les animaux ne s'habituent au positionnement des mangeoires.

### Résultats :

| | Alimentation J0 à J6 → | Item d'essai n°1 | | Item d'essai n°2 | |
|---|---|---|---|---|---|
| | Alimentation J7 à J8 → | Item d'essai n°1 | Item d'essai n°2 | Item d'essai n°1 | Item d'essai n°2 |
| Consommation (g) | Régimes → | A | B | C | D |
| T0+1h | Moyenne | 13,4a | 17,7bd | 14,6ab | 18,7cd |
| | Ecart type | 3,81 | 2,67 | 5,76 | 3,37 |
| | CV | 28,4 | 15,1 | 39,4 | 18,01 |
| | Delta (%) | | 32,1 | | 28,1 |
| T0+2h | Moyenne | 22,9a | 27, 1 ab | 23,9a | 30,6b |
| | Ecart type | 4,68 | 4,33 | 6,44 | 4,27 |
| | CV | 20,4 | 16,0 | 26,9 | 13,97 |
| | Delta (%) | | 18,3 | | 28,0 |
| T0+4h | Moyenne | 36,1 a | 49,3b | 40,4a | 49,3b |
| | Ecart type | 6,76 | 4,55 | 11,78 | 7,35 |
| | CV | 18,7 | 9,2 | 29,2 | 14,91 |
| | Delta (%) | | 36,6 | | 22,0 |
| T0+6h | Moyenne | 52,5a | 65,8b | 56,5a | 67,7b |
| | Ecart type | 6,24 | 6,37 | 12,07 | 12,37 |
| | CV | 11,9 | 9,7 | 21,4 | 18,28 |
| | Delta (%) | | 25,3 | | 19,8 |
| T0+8h | Moyenne | 66,2a | 89,4b | 71,7a | 89,2b |
| | Ecart type | 7,86 | 7,73 | 15,42 | 11,76 |
| | CV | 11,9 | 8,7 | 21,5 | 13,19 |
| | Delta (%) | | 35,0 | | 24,4 |
| T0+10h | Moyenne | 83,8a | 109,6b | 88,1a | 109,7b |
| | Ecart type | 9,87 | 11,12 | 15,13 | 13,92 |
| | CV | 11,8 | 10,1 | 17,2 | 12,69 |
| | Delta (%) | | 30,8 | | 24,5 |
| T0+24h | Moyenne | 160,8a | 209,6b | 165,5a | 212,8b |
| | Ecart type | 14,79 | 17,85 | 26,50 | 19,18 |
| | CV | 9,2 | 8,5 | 16,0 | 9,01 |
| | Delta (%) | | 30,3 | | 28,6 |

| | | | | | |
|---|---|---|---|---|---|
| NB : Les moyennes suivies des mêmes lettres ne sont pas significativement différentes au seuil de 5% | | | | | |

La consommation représentée est une consommation par cage, c'est-à-dire pour 10 poulets. Cette consommation répond à la formule suivante : Poids de la mangeoire fin de période - Poids de la mangeoire début de période.

Les moyennes sont faites sur 10 cages par choix de régime.

Dès T0 + 1 heure, on constate que l'item d'essai n°2 est préféré à l'item d'essai n°1. Pour la première série (Régimes A et B), c'est-à-dire pour les poussins qui ont reçu une alimentation pré expérimentale à base d'item d'essai n°1, la consommation d'item d'essai n°2 est de 17,7g (Régime B) contre une consommation d'item d'essai n°1 de 13,4g (Régime A). Ainsi les poulets ont consommé 4,3 g d'item d'essai n°2 en plus par rapport à l'item d'essai n°1, soit 32% en plus. De même, pour la deuxième série (Régimes C et D), c'est-à-dire pour les poussins qui ont reçu une alimentation pré expérimentale à base d'item d'essai n°2, les poulets ont consommé 18,7g d'item d'essai n°2 (Régime D) contre 14,6g d'item d'essai n°1 (Régime C). Ainsi les poulets ont consommé 4,1 g d'item d'essai n°2 en plus par rapport à l'item d'essai n°1, soit 28,1% en plus.

Le contrôle des consommations aux différents temps montre qu'à chaque fois l'item d'essai n° 2 est préféré à l'item d'essai n°1.

La variance et l'écart type sont des indicateurs de dispersion. Ils montrent des valeurs peu dispersées autour de la moyenne et donc des séries globalement homogènes.

Ainsi, la comparaison des régimes montre que les animaux préfèrent l'aliment contenant l'item d'essai n°2 à l'item d'essai n°1.

Il est en outre intéressant de constater que les animaux préfèrent l'item d'essai n°2 à l'item d'essai n°1 sur une consommation de 24 heures lorsque l'alimentation J0 à J6 contient l'item d'essai n°2.

Il est tout à noter qu'une faible teneur en additif olfactif, à savoir 0, 1 % en poids dans l'item d'essai n°2, conduit à une nette préférence des animaux en terme de consommation. L'additif olfactif neutralise l'odeur de l'hydroxy-analogue de méthionine, alors que celui-ci est présent à une teneur de 99,9% en poids.

### Exemple 3

L'objectif de l'essai est de comparer la consommation alimentaire des dindonneaux de 6 jours lorsqu'ils ont le choix entre des aliments contenant de l'hydroxy-analogue de méthionine (item d'essai n°1), de l'hydroxy-analogue de méthionine auquel on ajoute 0,5 g/kg d'additif olfactif (item d'essai n°2) ou de la méthionine (item d'essai n°3).

L'item d'essai n°2 comprend donc 0,05 % d'additif olfactif pour 99,95% d'hydroxy-analogue de méthionine.

Les items d'essais sont incorporés à un mélange maïs et soja, qui sert d'alimentation de base.

Le schéma expérimental se présente comme suit :

| Alimentation de J0 à J6 (8h) | Identique pour tous les animaux | | | | | |
|---|---|---|---|---|---|---|
| Alimentation J6 (de 8 à 17h), les animaux ont le choix entre : | A | | B | | C | |
| | Item d'essai n°3 | Item d'essai n°1 | Item d'essai n°3 | Item d'essai n°2 | Item d'essai n°1 | Item d'essai n°2 |
| Doses (%) | 0,20 | 0,23 | 0,20 | 0,23 | 0,23 | 0,23 |
| Effectifs | 60 | | 60 | | 60 | |

150 dindonneaux de souche BUT 9 sont sélectionnés et placés dans des cages équipées d'un abreuvoir à palette et de deux nourrisseurs d'une capacité de 0,3 kg environ. On place 5 dindonneaux par cage.

Les animaux reçoivent, au cours de la période pré expérimentale (c'est-à-dire de J0 à J6, 8h), un aliment démarrage standard identique.

Au cours de la phase expérimentale (c'est-à-dire J6 de 8 à 17 heures), les animaux sont séparés en 3 groupes A, B et C. Pour chaque groupe et dans chaque cage de ce groupe, les animaux ont le choix entre deux items d'essai. Par exemple, les animaux du groupe A peuvent choisir entre l'item d'essai n°3 et l'item d'essai n°1. L'alimentation est ad libitum avec contrôle de la consommation à T0 + 1 h, T0 + 3h, T0 + 5h, T0 + 7h et T0 + 9h. De plus, à chaque temps de mesure les deux mangeoires sont interverties afin d'éviter que les animaux ne s'habituent au positionnement des mangeoires.

Les doses d'incorporation entre les items n°1, n°2 et n°3 différent du fait de la différence d'apport en composé actif entre l'item d'essai n° 3, sous forme de poudre, et les items d'essais n° 1 et 2, sous forme liquide qui contiennent 88 % de matière active. Le facteur de correspondance utilisé entre l'item d'essai n° 3 et les items d'essai n°1 et 2 liquides est de 1,13 (0,2 x 1,13 = 0,23).

### Résultats :

| | Alimentation J6 → | A | | B | | C | |
|---|---|---|---|---|---|---|---|
| | | Item d'essai n°3 | Item d'essai n°1 | Item d'essai n°3 | Item d'essai n°2 | Item d'essai n°1 | Item d'essai n°2 |
| | Dose (%) | 0,2 | 0,23 | 0,2 | 0,23 | 0,23 | 0,23 |
| T0+1h | Moyenne | 6,8 | 9,0 | 9,1 | 9,1 | 7,8 | 8,3 |
| | Ecart type | 2,20 | 1,94 | 2,38 | 2,92 | 2,53 | 2,31 |
| | CV | 32,4 | 21,6 | 33,5 | 32,1 | 32,4 | 27,9 |
| | Delta (%) | | 32,4 | | 28,2 | | 6,4 |
| T0+3h | Moyenne | 15,5 | 16,4 | 14,9 | 18,6 | 15,0 | 17,2 |
| | Ecart type | 2,17 | 2,63 | 3,31 | 4,62 | 3,56 | 2,62 |
| | CV | 14,1 | 16,1 | 22,2 | 24,9 | 23,7 | 15,2 |
| | Delta (%) | | 6,5 | | 24,3 | | 14,7 |
| T0+5h | Moyenne | 23,3 | 23,8 | 22,6 | 28,1 | 21,6 | 26,1 |
| | Ecart type | 3,06 | 3,88 | 4,90 | 6,64 | 4,40 | 3,84 |
| | CV | 13,1 | 16,3 | 21,7 | 23,6 | 20,4 | 14,7 |
| | Delta (%) | | 2,1 | | 24,3 | | 20,8 |
| T0+7h | Moyenne | 30,3 | 29,6 | 30,0 | 34,9 | 27,4 | 32,5 |
| | Ecart type | 3,50 | 3,06 | 5,19 | 7,50 | 5,10 | 4,99 |
| | CV | 11,5 | 10,3 | 17,3 | 21,5 | 18,6 | 15,4 |
| | Delta (%) | | -2,3 | | 16,3 | | 18,6 |
| T0+9h | Moyenne | 37,7 | 37,4 | 36,8a | 43,2b | 34,4a | 40,4b |
| | Ecart type | 4,76 | 2,99 | 7,19 | 8,98 | 3,89 | 5,38 |
| | CV | 12,6 | 8,0 | 19,5 | 20,8 | 11,3 | 13,3 |
| | Delta (%) | | -0,8 | | 17,4 | | 17,4 |

La consommation représentée est une consommation par cage, c'est-à-dire pour 5 dindonneaux. Cette consommation répond à la formule suivante : Poids de la mangeoire fin de période - Poids de la mangeoire début de période. Les moyennes sont faites pour chaque groupe sur 12 cages.

Dès T0 + 1 heure, on constate que l'item d'essai n°2 est préféré à l'item d'essai n°3 (groupe B) ou à l'item d'essai N°1 (groupe C). Ces différences augmentent au fil des différents contrôles.

Par exemple, à T0 + 5 heures, alors que la différence entre la consommation de l'item d'essai n°1 et celle de l'item d'essai n°3 dans le groupe A n'est pas significative, le groupe B a consommé en moyenne 28,1 g d'item d'essai n°2, contre 22,6 g d'item d'essai n°3. Ainsi les dindonneaux ont consommé 24 % d'item d'essai n°2 en plus par rapport à l'item d'essai n°3. Egalement, le groupe C a consommé en moyenne 26,1 g d'item d'essai n°2, contre 21,6 g d'item d'essai n°1. Ainsi les dindonneaux ont consommé 21% d'item d'essai n°2 en plus par rapport à l'item d'essai n°1.

A T0 + 9h, les moyennes sont significativement différentes au seuil de 5%. Il apparaît ainsi une préférence (+17 % de consommation) des animaux pour l'aliment contenant l'item n°2 (hydroxy-analogue + additif olfactif) lorsqu'il est en libre choix soit avec l'item n°1 (groupe C), soit avec l'item n°3 (groupe B). En outre, les différences de consommation ne sont pas significatives dans le cas du choix entre l'item d'essai n°1 et l'item d'essai n°3 (groupe A).

Enfin, l'ajout de l'additif olfactif à l'hydroxy-analogue de méthionine (item d'essai n°2) entraîne une très forte préférence (p=0.009) des animaux par rapport à l'hydroxy-analogue de méthionine seul (item d'essai n°1).

### Exemple 4

L'objectif de l'essai est de comparer la consommation alimentaire de porcelets de 7 à 8 kg en post-sevrage lorsqu'ils ont le choix entre des aliments contenant de l'hydroxy-analogue de méthionine (item d'essai n°1) ou de l'hydroxy-analogue de méthionine auquel on ajoute 0,5 g/kg d'additif olfactif (item d'essai n°2).

L'item d'essai n°2 comprend donc 0,05% d'additif olfactif pour 99,95% d'hydroxy-analogue de méthionine.

Les items d'essais sont incorporés à un aliment de base à base de maïs et de soja et contenant 5% de mélasse de betterave.

Le schéma expérimental se présente comme suit :

| Alimentation | Identique | |
|---|---|---|
| de J0 à J7 (8h) | | |
| Alimentation J7, les animaux ont le choix entre : | Item d'essai n°1 | Item d'essai n°2 |
| Doses (%) | 0,24 | 0,24 |
| Effectifs | 4 | |

Quatre porcelets sont sélectionnés et placés en cages individuelles comprenant deux mangeoires et une pipette qui permet l'abreuvement.

Durant 7 jours, les animaux reçoivent un aliment de base comprenant du maïs et du soja et ne contenant pas de source de méthionine additionnelle.

Le matin du 7^{ème} jour post-sevrage les animaux ont le choix entre l'item d'essai n°1 et l'item d'essai n° 2, chacun de ces items d'essai étant situé dans deux mangeoires différentes de la même cage. Les mesures de consommation sont réalisées à T0 + 3 heures ; T0 + 6 heures ; T0 + 9 heures et T0 + 24 heures au premier contact. De plus, à chaque temps de mesure, les deux mangeoires sont interverties, de manière à éviter une habitude due à la configuration de la cage.

### Résultats :

| Consommation (g) | Item d'essai n°1 | Item d'essai n°2 |
|---|---|---|
| A T0 + 24h | | |
| Moyenne | 163,9a | 228,8b |
| Ecart type (SEM)I | 57,8 | 97,8 |

Les résultats de consommations apparaissent très variables aux premières heures avec des coefficients de variation supérieurs à 100 %. Toutefois, après 24 heures de choix, la variabilité des consommations mesurées, bien qu'élevées, sont acceptables. Les variations obtenues sont dues au faible nombre de répétitions (seulement 4) et au modèle animal lui-même qui, contrairement aux poussins, ne s'alimente pas de façon régulière sur le nycthémère mais plus sous forme de repas.

La consommation représentée est une consommation par cage, c'est-à-dire pour un porcelet. Les moyennes sont réalisées sur 4 cages.

On constate une tendance selon laquelle l'item d'essai n°2 est préféré à l'item d'essai n°1. En effet, la consommation de l'item d'essai n°1 est en moyenne de 163,9g contre une consommation d'item d'essai n°2 de 228,8g en moyenne. Ainsi les porcelets ont en moyenne consommé 64,9g d'item d'essai n°2 en plus par rapport à l'item d'essai n°1, soit 40% en plus.

L'ajout de l'additif olfactif (item d'essai n°2) permet d'augmenter son acceptabilité lors d'un libre choix chez le porcelet.

## Revendications

1. Complément alimentaire pour animaux, sous forme solide divisée ou sous forme liquide, comprenant au moins un composé actif, à savoir un acide aminé ou un dérivé d'acide aminé, présent à une teneur supérieure ou égale à 50% en poids du complément alimentaire, **caractérisé en ce qu'**il comprend en outre un additif olfactif, présent à une teneur inférieure ou égale à 3% en poids du complément alimentaire, ledit additif olfactif neutralisant l'odeur, perceptible par l'homme, dudit composé actif.

2. Complément alimentaire selon la revendication 1, dans lequel le composé actif et l'additif olfactif sont mélangés et au contact l'un de l'autre.

3. Complément alimentaire selon la revendication 1 ou 2, dans lequel le composé actif est présent à une teneur supérieure ou égale à 90% en poids dudit complément.

4. Complément alimentaire selon l'une quelconque des revendications précédentes, dans lequel ledit additif olfactif est présent à une teneur inférieure ou égale à 1% en poids dudit complément.

5. Complément alimentaire selon la revendication 4, **caractérisé en ce que** l'additif olfactif est présent à une teneur comprise entre 0,01 % et 1%, ou entre 0,03% et 0,1 %, en poids dudit complément.

6. Complément selon l'une quelconque des revendications précédentes, **caractérisé en ce que** ledit composé actif est la méthionine et l'acide 2-hydroxy-4-méthylthiobutanoïque.

7. Aliment pour animal, notamment ration alimentaire, comprenant le complément alimentaire selon l'une quelconque des revendications 1 à 6.

8. Procédé d'alimentation d'un animal d'élevage, **caractérisé en ce qu'**on ajoute un complément selon l'une quelconque des revendications 1 à 6 à la ration alimentaire dudit animal.

9. Utilisation du complément alimentaire selon l'une quelconque des revendications 1 à 6 pour nourrir un animal d'élevage.

10. Utilisation selon la revendication précédente pour améliorer les performances zootechniques dudit animal.

## Claims

1. Animal feed supplement, in divided solid form or in liquid form, comprising at least one active compound, namely an amino acid or an amino acid derivative, present in an amount greater than or equal to 50% by weight of the feed supplement, **characterized in that** it additionally comprises an olfactory additive, present in an amount less than or equal to 3% by weight of the feed supplement, the said olfactory additive neutralizing the odour, perceptible to humans, of the said active compound.

2. Feed supplement according to Claim 1, in which the active compound and the olfactory additive are mixed and in contact with each other.

3. Feed supplement according to Claim 1 or 2, in which the said active compound is present in an amount greater than or equal to 90% by weight of the said supplement.

4. Feed supplement according to any one of the preceding claims, in which the said olfactory additive is present in an amount less than or equal to 1% by weight of the said supplement.

5. Feed supplement according to Claim 4, **characterized in that** the said olfactory additive is present in an amount between 0.01% and 1%, or between 0.03% and 0.1%, by weight of the said supplement.

6. Supplement according to any one of the preceding claims, **characterized in that** the said active compound is methionine and 2-hydroxy-4-methylthiobutanoic acid.

7. Animal feed, in particular feed ration, comprising the feed supplement according to any one of Claims 1 to 6.

8. Method of feeding a farm animal, **characterized in that** a supplement according to any one of Claims 1 to 6 is added to the feed ration for the said animal.

9. Use of the feed supplement according to any one of Claims 1 to 6, for feeding a farm animal.

10. Use according to the preceding claim, for improving the zootechnical performance of the said animal.

## Patentansprüche

1. Nahrungsergänzungsmittel für Tiere in fester oder in flüssiger Form, welches zumindest eine aktive Zusammensetzung aufweist, nämlich eine Aminosäure oder ein Derivat der Aminosäure, die mit einem Gehalt von größer oder gleich 50 % des Gewichts des Nahrungsergänzungsmittels vorliegt, **dadurch gekennzeichnet, dass** es darüber hinaus einen Geruchszusatzstoff aufweist, der mit einem Gehalt kleiner oder gleich 3 % des Gewichts des Nahrungsergänzungsmittels vorliegt, wobei der Geruchszusatzstoff den Geruch der aktiven Zusammensetzung, welcher durch den Menschen wahrgenommen wird, neutralisiert.

2. Nahrungsergänzungsmittel nach Anspruch 1, bei welchem die aktive Zusammensetzung und der Geruchszusatzstoff gemischt und in Kontakt miteinander sind.

3. Nahrungsergänzungsmittel nach Anspruch 1 oder 2, bei welchem die aktive Zusammensetzung mit einem Gehalt größer oder gleich 90 % des Gewichts des Nahrungsergänzungsmittels vorliegt.

4. Nahrungsergänzungsmittel nach einem der vorstehenden Ansprüche, bei welchem der Geruchszusatzstoff mit einem Gehalt von weniger oder gleich 1 % des Gewichts des Nahrungsergänzungsmittels vorliegt.

5. Nahrungsergänzungsmittel nach Anspruch 4, **dadurch gekennzeichnet, dass** der Geruchszusatzstoff mit einem Gehalt von zwischen 0,01 % bis 1 %, oder zwischen 0,03 % und 0,1 % des Gewichts des Nahrungsergänzungsmittels vorliegt.

6. Nahrungsergänzungsmittel nach einem der vorstehenden Ansprüche, **dadurch gekennzeichnet, dass** die aktive Zusammensetzung Methionin und 2-Hydroxy-4-Methylthiobutansäure ist.

7. Nahrungsmittel für Tiere, insbesondere täglicher Nahrungsbedarf, welches das Nahrungsergänzungsmittel gemäß einem der Ansprüche 1 bis 6 aufweist.

8. Verfahren zur Nahrungsergänzung eines Zuchttiers, **dadurch gekennzeichnet, dass** ein Ergänzungsmittel nach einem der Ansprüche 1 bis 6 zu dem täglichen Nahrungsbedarf des Tieres hinzugefügt wird.

9. Verwendung des Nahrungsergänzungsmittels nach einem der Ansprüche 1 bis 6 zum Ernähren von Zuchttieren.

10. Verwendung nach dem vorstehenden Anspruch zur Verbesserung der Tierzuchtleistungen des Tieres.
